# EUROPÄISCHE PATENTSCHRIFT

(11) **EP 1 000 448 B1**
(45) Veröffentlichungstag und Bekanntmachung des Hinweises auf die Patenterteilung: **31.10.2001**
(21) Anmeldenummer: 98949869.6
(22) Anmeldetag: 30.07.1998
(51) Int. Cl.: H02B 13/02

(54) **MITTELSPANNUNGS-SCHALTANLAGE MIT SAMMELSCHIENENRAUM UND ANSCHLUSSRAUM**
MIDDLE VOLTAGE SWITCHING STATION WITH A BUSBAR SPACE AND A CONNECTION SPACE
INSTALLATION DE DISTRIBUTION ELECTRIQUE MOYENNE TENSION COMPORTANT UN ESPACE DE BARRES COLLECTRICES ET UN ESPACE DE RACCORDEMENT

(30) Priorität: 31.07.1997 DE 19734553
(43) Veröffentlichungstag der Anmeldung: 17.05.2000
(73) Patentinhaber: SIEMENS AKTIENGESELLSCHAFT, 80333 München (DE)
(72) Erfinder: KOPKE, Volker, D-91054 Bükenhof (DE); SCHUDT, Karl, D-61203 Reichelsheim (DE)
(86) Internationale Anmeldenummer: DE9802289
(87) Internationale Veröffentlichungsnummer: WO9907045

(56) Entgegenhaltungen:
- DE-A- 3 040 350
- DE-A- 3 337 276
- DE-U- 8 123 891
- DE-U- 29 622 654

## Beschreibung

Die Erfindung betrifft eine metallgekapselte, luftisolierte Mittelspannungs-Schaltanlage mit einem Sammelschienenraum zur Aufnahme von einer der Anzahl der Phasen entsprechenden Zahl von Durchführungsstützern mit jeweils einem Sammelschienenanschluß und mit einem Anschlußraum zur Aufnahme von einer der Anzahl der Phasen entsprechenden Zahl von Durchführungswandlern mit jeweils einem Kabelanschluß.

Eine Mittelspannungs-Schaltanlage der eingangs definierten Art ist beispielsweise durch die DE 195 02 061 Al bekannt. Hier sind der Sammelschienenraum und der Anschlußraum durch eine Trennwand, die einfacherweise als ein Abdeckblech ausgeführt sein kann, räumlich voneinander getrennt. Um die elektrische Verbindung zwischen diesen beiden Räumen herstellen zu können, sind für die Sammelschienen die sogenannten Durchführungstützer und für die Kabelanschlüsse u. a. die sogenannten Durchführungswandler vorgesehen. Abhängig vom Leistungsumfang und Anlagentyp sind die Durchführungsstützer und die Durchführungswandler als eigenständige Baueinheiten mit entsprechend unterschiedlicher Bauform innerhalb der jeweiligen metallgekapselten, luftisolierten Mittelspannungs-Schaltanlage eingesetzt. Die unterschiedlichen Befestigungsmittel und sonstige Sicherheitsanforderungen, insbesondere aber auch die aus Sicherheitsgründen erforderlichen elektrischen Isolationsbedingungen, zur Einhaltung bestimmter Mindestabstände zu den jeweiligen Raumbegrenzungen innerhalb der Sammelschienenräume und der Anschlußräume erfordern eine Vielzahl verschiedenartiger Ausführungstypen auch von verschiedenen Bauelementen, wie u.a. die Durchführungsstützer und die Durchführungswandler, aber auch von an sich gieichwirkenden Bauelementen.

Die der Erfindung zugrundeliegende Aufgabe besteht darin, einerseits die Typenvielfalt der verschiedenen Bauelemente erheblich zu reduzieren und anderseits gleichwirkende Bauelemente zu standardisieren und darüber hinaus die Kombination der verschiedenartigen Bauelemente erheblich zu erleichtern ohne wesentliche konstruktive Anpassungsveränderungen vorsehen zu müssen. Erfindungsgemäß wird dies durch die Merkmale
1.1 der Sammelschienenraum ist unten im Bereich des angrenzenden Anschlußraumes durch ein Stützer-Trageblech begrenzt,
1.2 der Anschlußraum ist oben im Bereich des angrenzenden Sammelschienenraumes durch ein Wandler-Trageblech begrenzt,
1.3 das Stützer-Trageblech und das Wandler-Trageblech(WTB) sind durch einen linken und einen rechten Stützwinkel annähernd parallel zueinander abstandsbegrenzt derart angeordnet, daß unterhalb eines jeweiligen Durchführungsstützers ein entsprechender Durchführungswandler positionierbar ist,
1.4 die Durchführungsstützer bzw. die Durchführungswandler sind auf dem Stützer-Trageblech bzw. auf dem Wandler-Trageblech jeweils als eigenständige Funktionseinschübe ausgebildet,
1.5 die Durchführungsstützer bzw. die Durchführungswandler sind auf dem Stützer-Trageblech bzw. auf dem Wandler-Trageblech durch eine Stützer-Führungskontur bzw. durch eine Wandler-Führungskontur geführt und lagefixiert,
1.6 die Durchführungsstützer bzw. die Durchführungswandler sind auf dem Stützer-Trageblech bzw. auf dem Wandler-Trageblech im hinteren Anschlagbereich durch eine Stützer-Führungsleiste bzw. durch eine Wandler-Führungsleiste lösbar mit dem Stützer-Trageblech bzw. mit dem Wandler-Trageblech verbunden,
erreicht.

Als wesentlich für die Erfindung ist anzusehen, daß der Durchführungsstützer und der Durchführungswandler jeweils als eigenständige Funktionseinschübe ausgestattet sind, die auf dem Stützer-Trageblech bzw. auf dem Wandler-Trageblech in definierter Lage zueinander angeordnet sind. Dabei sind das Stützer-Trageblech und das Wandler-Trageblech ebenfalls in einer die Sicherheitskriterien in dieser Technik berücksichtigenden Weise abstandsbegrenzt angeordnet und sowohl die Durchführungsstützer als auch die Durchführungswandler durch die Stützer-Führungskontur bzw. die Wandler-Führungskontur auf dem jeweiligen Stützer-Trageblech bzw. dem Wandler-Trageblech geführt und lagefixiert.

Die Stützer- und die Wandler-Führungskontur, beispielsweise ausgebildet als eine aus der jeweiligen Gehäusestruktur der Durchführungsstützer bzw. der Durchführungswandler herausragender quaderförmiger Gehäuseüberstand, greift jeweils in eine entsprechende Ausnehmung im Stützer-Trageblech bzw. im Wandler-Trageblech derart ein, daß die Durchführungsstützer bzw. die Durchführungswandler auf dem Stützer-Trageblech bzw. auf dem Wandler-Trageblech lagefixiert sind. Darüber hinaus sind die Durchführungsstützer und die Durchführungswandler im hinteren Anschlagbereich durch eine quer zur Einschubrichtung angeordnete Stützer-Führungsleiste bzw. Wandler-Führungsleiste lagepositioniert begrenzt. Die Stützer-Führungsleiste bzw. die Wandler-Führungsleiste dient gleichzeitig zur lösbaren Befestigung auf dem jeweiligen Stützer-Trageblech bzw. auf dem jeweiligen Wandler-Trageblech.

Die Stützer- und Wandlerführungskontur dienen beispielsweise auch der Herausführung von Leitungen aus dem Niederspannungsbereich und der kapazitiven Anzeige von Strömen innerhalb der Mittelspannungs-Schaltanlage.

Gemäß einer vorteilhaften Ausgestaltung der Erfindung sind die Merkmale
2.1 die Durchführungsstützer bzw. die Durchführungswandler weisen rückseitig eine quaderförmige Stützer-Außenkontur bzw. eine quaderförmige Wandler-Außenkontur auf,
2.2 der quaderförmigen Stützer-Außenkontur bzw. der quaderförmigen Wandler-Außenkontur schließt sich jeweils ein nach innen gerichteter Stützer-Klemmschlitz bzw. Wandler-Klemmschlitz mit jeweils konzentrischem Querschnitt im Innenbereich an,
2.3 der jeweilige Klemmschlitz wird im Sammelschienenraum bzw. im Anschlußraum durch eine ebenfalls quaderförmige Stützer-Innenkontur bzw. durch eine ebenfalls quaderförmige Wandler-Innenkontur des Durchführungsstützers bzw. des Durchführungswandlers begrenzt,
2.4 zwischen der Stützer-Außenkontur und der Stützer-Innenkontur des Durchführungsstützers bzw. der Wandler-Außenkontur und der Wandler-Innenkontur des Durchführungswandlers ist ein von oben einschiebbares oberes Blendenblech bzw. ein von unten einschiebbares unteres Blendenblech vorgesehen,
2.5 zwischen dem oberen Blendenblech und dem unteren Blendenblech ist frontabdeckend ein mittleres Blendenblech angeordnet,
vorgesehen.

Demnach befindet sich im Anschluß an der jeweiligen quaderförmigen Stützer-Außenkontur des Durchführungsstützers bzw. an der jeweiligen quaderförmigen Wandler-Außenkontur des Durchführungswandlers ein Klemmschlitz , der im Innenbereich jeweils durch eine konzentrische Querschnittskontur begrenzt ist. An diesem jeweiligen Klemmschlitz der Stützer-Außenkontur bzw. der Wandler-Außenkontur schließt sich ebenfalls die quaderförmig ausgebildete Stützer-Innenkontur bzw. die quaderförmig ausgebildete Wandler-Innenkontur an. Durch diese konstruktive Ausgestaltung der Durchführungsstützer bzw. der Durchführungswandler ist in sehr vorteilhafter Weise ein Blendenblech von oben bzw. von unten derart einschiebbar, daß die Durchführungsstützer und die darunter angeordneten Durchführungswandler innerhalb der metallgekapselten, luftisolierten Mittelspannungs-Schaltanlage in einem einzigen Montageschritt funktionsgerecht zueinander ausgerichtet sind. Das zwischen dem oberen und dem unteren Blendenblech angeordnete mittlere Blendenblech schließt in einfacher Weise die Durchführungsstützer und die Durchführungswandler in der Mittelspannungs-Schaltanlage frontflächendeckend ab.

Gemäß einer weiteren vorteilhaften Ausgestaltung der Erfindung sind die Merkmale
3.1 die quaderförmigen Außen- und Innenkonturen der Stützer und die quaderförmigen Außen- und Innenkonturen der Wandler weisen vorzugsweise quadratische Querschnittskontur auf,
3.2 die quaderförmigen Außen- und Innenkonturen der Stützer bzw. die quaderförmigen Außen- und Innenkonturen der Wandler weisen eine einheitliche Querschnittkontur auf,
3.3 die quaderförmigen Außen- und Innenkonturen der Stützer und die quaderförmigen Außen- und Innenkonturen der Wandler weisen eine einheitliche Querschnittkontur auf,
vorgesehen.

Mit der quaderförmigen Ausgestaltung sowohl der Außenkontur als auch der Innenkontur der Stützer und der Wandler sind diese in Verbindung mit den von oben bzw. von unten einschiebbaren oberen und unteren Blendenblech als kompakte Funktionseinheiten innerhalb der Mittelspanungs-Schaltanlage eingesetzt. Die Kompaktheit derartiger Anlagen wird zusätzlich noch dadurch erhöht, daß nicht nur die quaderförmigen Außen- und Innenkonturen der Stützer bzw. der Wandler einheitliche Querschnittkontur aufweisen sondern darüber hinaus auch die Stützer und die Wandler mit einheitlicher Querschnittskontur versehen sind.

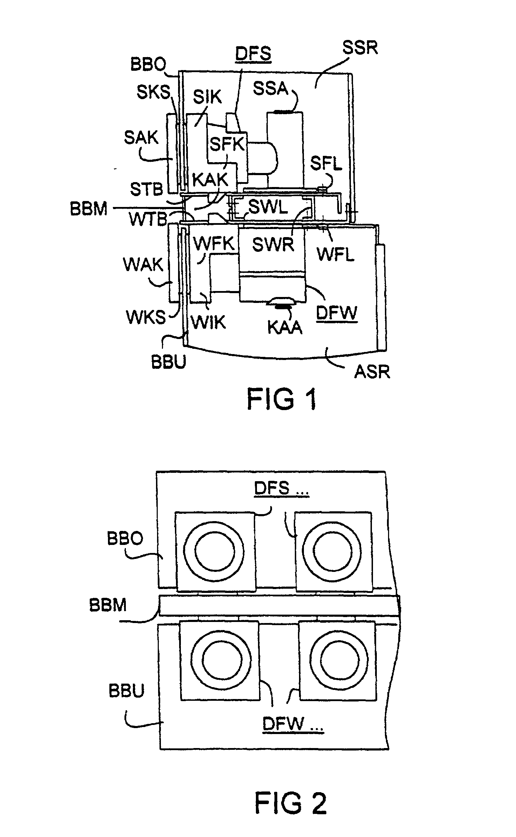

Die Erfindung wird durch ein figürlich dargestelltes Ausführungsbeispiel in zwei Figuren näher erläutert, wobei die Figur 1 den Sammelschienenraum SSR mit den Durchführungsstützern DFS... und den Anschlußraum ASR mit den Durchführungswandlern DFW... in der Seitenansicht zeigt, während die Figur 2 diesen Bereich in der Vorderansicht des nach hinten weisenden Teils der metallgekapselten, luftisolierten Mittelspannungs-Schaltanlage abbildet.

Die Figur 1 zeigt in stark vereinfachter Darstellung den Sammelschienenraum SSR und den darunter befindlichen Anschlußraum ASR. Desweiteren ist erkennbar, daß im Sammelschienenraum SSR die Durchführungsstützer DFS ... (Fig. 2) und im Anschlußraum ASR die Durchführungswandler DFW... (Fig. 2) angeordnet sind, von denen jeweils nur der erste der hintereinanderliegenden Durchführungsstützer DFS und der erste der hintereinanderliegenden Durchführungswandler DFW erkennbar ist. Der Sammelschienenraum SSR wird unten zum angrenzenden Anschlußraum ASR von dem Stützer-Trageblech STB begrenzt, während der Anschlußraum ASR oben zum angrenzenden Sammelschienenraum SSR von dem Wandler-Trageblech WTB begrenzt ist. Darüber hinaus ist ersichtlich, daß das Stützer-Trageblech STB und das Wandler-Trageblech WTB von dem linken Stützwinkel SWL und dem rechten Stützwinkel SWR auf annähernd parallelen Abstand zueinander positioniert sind. Dadurch ergibt sich in vorteilhafterweise der Kabelkanal KAK. Das Stützer-Trageblech STB dient gleichzeitig der Aufnahme und der Ausrichtung des Durchführungsstützers DFS, während das Wandler-Trageblech WTB ebenfalls der Aufnahme und der Führung des Durchführungswandler DFS dient. Der Durchführungsstützer DFS und der Durchführungswandler DFW, die innerhalb der Mittelspannungs-Schaltanlage spiegelbildlich zueinander angeordnet sind, weisen jeweils eigene Führungskonturen, der Durchführungsstützer DFS die Stützer-Führungskontur SFK und der Durchführungswandler die Wandler-Führungskontur WFK, auf, die in entsprechende, nicht näher bezeichnete Ausnehmungen des Stützer-Trageblechs STB und des Wandler-Trageblechs WTB eingreifen. Durch diese Führungskonturen sind der Durchführungsstützer DFS und der Durchführungswandler DFW auf dem Stützer-Trageblech STB bzw. auf dem Wandler-Trageblech WTB in ihren jeweiligen Endlagen positioniert. Die Durchführungstützer DFS und die Durchführungswandler DFW werden im eingeschobenen Zustand durch die Stützer-Führungsleiste SFL bzw. durch die Wandler-Führungsleiste WFL lösbar, beispielsweise durch Schraubverbindungen, befestigt.

Sowohl die Durchführungsstützer DFS als auch die Durchführungswandler DFW sind mit einer quaderfärmigen Stützer-Außenkontur bzw. mit einer Wandler-Außenkontur WAK versehen, an der sich der Stützer-Klemmschlitz KLS bzw. der Wandler-Klemmschlitz KLW anschließen. Der Stützer-Klemmschlitz KLS bzw. der Wandler-Klemmschlitz KLW sind durch die sich anschließende Stützer-Innenkontur SIK bzw. durch die Wandler-Innnenkontur WIK begrenzt. Der Stützer-Klemmschlitz KLS und der Wandler-Klemmschlitz KLW sind in den Innenbereichen mit einer nicht bezeichneten konzentrischen Querschnittkontur versehen. Zwischen der Stützer-Außenkontur SAK und der Stützer-Innenkontur SIK wird von oben das obere Blendenblech BBO in den Stützer-Klemmschlitz KLS eingeschoben, während zwischen der Wandler-Außenkontur WAK und der Wandler-Innenkontur WIK von unten das untere Blendenblech BBU in den Wandler-Klemmschlitz KLW Aufnahme findet. Der Vollständigkeit halber ist angedeutet, das der Durchführungsstützer DFS den Sammelschienenanschluß SSA aufweist, während der Durchführungswandler an vergleichbarer Stelle mit dem Kabelanschluß KAA versehen ist.

Die Figur 2 zeigt, wie eingangs erwähnt, die Vorderansicht des hinteren Bereichs der Mittelspannungs-Schaltanlage mit dem Blick auf das obere und das untere Blendenblech BBO und BBU. Außerdem ist erkennbar, daß zwischen dem oberen und dem unteren Blendenblech BBO und BBU das mittlere Blendenblech BBM angeordnet ist, so daß dieser hintere Bereich der Mittelspannungs-Schaltanlage in der gesamten Frontfläche abgedeckt ist. Die gleich großen Querschnitte der Stützer-Außenkontur SAK (Fig. 1) der Durchführungsstützer DFS... und der Wandler-Außenkontur WAK (Fig. 1) der Durchführungswandler DFW... ermöglichen eine einheitliche Aufbauweise und bieten auch rein optisch einen kompakten Gesamteindruck der aus Funktionseinschüben zusammengesetzten Teilkomponenten der metallgekapselten, luftisolierten Mittelspannungs-Schaltanlage.

## Patentansprüche

1. Metallgekapselte, luftisolierte Mittelspannungs-Schaltanlage mit einem Sammelschienenraum zur Aufnahme von einer der Anzahl der Phasen entsprechenden Zahl von Durchführungsstützern mit jeweils einem Sammelschienenanschluß und mit einem Anschlußraum zur Aufnahme von einer der Anzahl der Phasen entsprechenden Zahl von Durchführungswandlern mit jeweils einem Kabelanschluß,
**gekennzeichnet durch** die Merkmale
1.1 der Sammelschienenraum (SSR) ist unten im Bereich des angrenzenden Anschlußraumes (ASR) **durch** ein Stützer-Trageblech (STB) begrenzt,
1.2 der Anschlußraum (ASR) ist oben im Bereich des angrenzenden Sammelschienenraumes (SSR) **durch** ein Wandler-Trageblech (WTB) begrenzt,
1.3 das Stützer-Trageblech (STB) und das Wandler-Trageblech (WTB) sind **durch** einen linken und einen rechten Stützwinkel (SWL, SWR)annähernd parallel zueinander abstandsbegrenzt derart angeordnet, daß unterhalb eines jeweiligen Durchführungsstützers (DFS...) ein entsprechender Durchführungswandler (DFW...) positionierbar ist,
1.4 die Durchführungsstützer (DFS...) bzw. die Durchführungswandler (DFW...) sind auf dem Stützer-Trageblech (STB) bzw. auf dem Wandler-Trageblech (WTB) jeweils als eigenständige Funktionseinschübe (FES...) ausgebildet,
1.5 die Durchführungsstützer (DFS...) bzw. die Durchführungswandler (DFW...) sind auf dem Stützer-Trageblech (STB) bzw. auf dem Wandler-Trageblech (WTB) **durch** eine Stützer-Führungskontur (SFK) bzw. **durch** eine Wandler-Führungskontur (WFK) geführt und lagefixiert,
1.6 die Durchführungsstützer (DFS...) bzw. die Durchführungswandler (DFW...) sind auf dem Stützer-Trageblech (STB) bzw. auf dem Wandler-Trageblech (WTB) im hinteren Anschlagbereich **durch** eine Stützer-Führungsleiste (SFL) bzw. **durch** eine Wandler-Führungsleiste (WFL) lösbar mit dem Stützer-Trageblech (STB) bzw. mit dem Wandler-Trageblech (WTB) verbunden.

2. Metallgekapselte, luftisolierte Mittelspannungs-Schaltanlage nach Patentanspruch 1,
**gekennzeichnet durch** die Merkmale
2.1 die Durchführungsstützer (DFS...) bzw. die Durchführungswandler (DFW...) weisen rückseitig eine quaderförmige Stützer-Außenkontur (SAK) bzw. eine quaderförmige Wandler-Außenkontur (WAK) auf,
2.2 der quaderförmigen Stützer-Außenkontur (SAK) bzw. der quaderförmigen Wandler-Außenkontur (WAK) schließt sich jeweils ein nach innen gerichteter Stützer-Klemmschlitz (KLS) bzw. Wandler-Klemmschlitz (KLW) mit jeweils konzentrischem Querschnitt im Innenbereich an,
2.3 der jeweilige Klemmschlitz (KLS) wird im Sammelschienenraum (SSR) bzw. im Anschlußraum (ASR) **durch** eine ebenfalls quaderförmige Stützer-Innenkontur(SIK) bzw. **durch** eine ebenfalls quaderförmige Wandler-Innenkontur (WIK) des Durchführungsstützers (DFS...) bzw. des Durchführungswandlers (DFW...) begrenzt,
2.4 zwischen der Stützer-Außenkontur (SAK) und der Stützer-Innenkontur (SIK) des Durchführungsstützers (DFS...) bzw. der Wandler-Außenkontur (WAK) und der Wandler-Innenkontur (WIK) des Durchführungswandlers (DFW...) ist ein von oben einschiebbares oberes Blendenblech (BBo) bzw. ein von unten einschiebbares unteres Blendenblech (BBU) vorgesehen,
2.5 zwischen dem oberen Blendenblech (BBO) und dem unteren Blendenblech (BBU) ist frontabdeckend ein mittleres Blendenblech (BBM) angeordnet.

3. Metallgekapselte, luftisolierte Mittelspannungs-Schaltanlage nach den Patentansprüchen 1 und 2,
**gekennzeichnet durch** die Merkmale
3.1 die quaderförmigen Außen- und Innenkonturen der Stützer (SAK, SIK) und die quaderförmigen Außen- und Innenkonturen der Wandler (WAK, WIK) weisen vorzugsweise quadratische Querschnittskontur auf,
3.2 die quaderförmigen Außen- und Innenkonturen der Stützer (SAK, SIK) bzw. die quaderförmigen Außen- und Innenkonturen der Wandler (WAK, WIK) weisen eine einheitliche Querschnittkontur auf,
3.3 die quaderförmigen Außen- und Innenkonturen der Stützer (SAR, SIK) und die quaderförmigen Außen- und Innenkonturen der Wandler (WAK, WIK) weisen eine einheitliche Querschnittkontur auf.

## Claims

1. Metal clad, air-insulated medium-voltage switchgear assembly having a busbar compartment to accommodate a number of bushing-type insulation posts, the number corresponding to the number of phases and each insulation post having a busbar terminal, and having a terminal compartment to accommodate a number of bushing-type transformers, the number corresponding to the number of phases and the transformers each having a cable terminal,
**characterized by** the following features:
1.1 the busbar compartment (SSR) is bounded at the bottom, in the region of the adjacent terminal compartment (ASR), by an insulation-post support plate (STB),
1.2 the terminal compartment (ASR) is bounded at the top, in the region of the adjacent busbar compartment (SSR), by a transformer support plate (WTB),
1.3 the insulation-post support plate (STB) and the transformer support plate (WTB) are arranged approximately parallel to each other and at a limited distance by means of a left-hand and a right-hand supporting angle (SWL, SWR), in such a way that each bushing-type insulation post (DFS...) can have a corresponding bushing-type transformer (DFW...) positioned beneath it,
1.4 the bushing-type insulation posts (DFS...) and the bushing-type transformers (DFW...) are in each case constructed as independent withdrawable functional inserts (FES...) on the insulation-post support plate (STB) and on the transformer support plate (WTB),
1.5 the bushing-type insulation posts (DFS...) and the bushing-type transformers (DFW...) are guided and fixed in position on the insulation-post support plate (STB) and on the transformer support plate (WTB) by an insulation-post guide contour (SFK) and by a transformer guide contour (WFK), respectively,
1.6 in the rear stop region, the bushing-type insulation posts (DFS...) and the bushing-type transformers (DFW...) on the insulation-post support plate (STB) and on the transformer support plate (WTB), respectively, are respectively detachably connected to the insulation-post support plate (STB) and to the transformer support plate (WTB) by an insulation-post guide bar (SFL) and by a transformer guide bar (WFL).

2. Metal clad, air-insulated medium-voltage switchgear assembly according to Patent Claim 1,
**characterized by** the following features:
2.1 the bushing-type insulation posts (DFS...) and the bushing-type transformers (DFW...) have on the rear side a cube-like insulation-post outer contour (SAK) and a cube-like transformer outer contour (WAK),
2.2 the cube-like insulation-post outer contour (SAK) and the cube-like transformer outer contour (WAK) are in each case adjoined by an inwardly directed insulation-post clamping slot (KLS) and an inwardly directed transformer clamping slot (KLW), respectively, each having a concentric cross-section in the inner region,
2.3 the respective clamping slot (KLS) is bounded in the busbar compartment (SSR) and in the terminal compartment (ASR), respectively, by a similarly cube-like insulation-post inner contour (SIK) and by a similarly cube-like transformer inner contour (WIK) of the bushing-type insulation post (DFS...) and of the bushing-type transformer (DFW...),
2.4 provided between the insulation-post outer contour (SAK) and the insulation-post inner contour (SIK) of the bushing-type insulation post (DFS...) and, respectively, between the transformer outer contour (WAK) and the transformer inner contour (WIK) of the bushing-type transformer (DFW...) is a top blanking panel (BBO), which can be inserted from above, and a bottom blanking panel (BBU), which can be inserted from below,
2.5 a central blanking panel (BBM) is arranged between the top blanking panel (BBO) and the bottom blanking panel (BBU), covering the front.

3. Metal clad, air-insulated medium-voltage switchgear assembly according to Patent Claims 1 and 2,
**characterized by** the following features:
3.1 the cube-like outer and inner contours of the insulation posts (SAK, SIK), and the cube-like outer and inner contours of the transformers (WAK, WIK), have a preferably square cross-sectional contour,
3.2 the cube-like outer and inner contours of the insulation posts (SAK, SIK) and/or the cube-like outer and inner contours of the transformers (WAK, WIK) have a uniform cross-sectional contour,
3.3 the cube-like outer and inner contours of the insulation posts (SAK, SIK) and the cube-like outer and inner contours of the transformers (WAK, WIK) have a uniform cross-sectional contour.

## Revendications

1. Installation de commutation à moyenne tension à blindage métallique, isolée par de l'air, comportant une zone de barres collectrices pour la réception d'un nombre d'isolateurs supports de traversée correspondant au nombre des phases et ayant respectivement un raccordement de barres collectrices, et comportant une zone de raccordement pour la réception d'un nombre de convertisseurs de traversée correspondant au nombre des phases et ayant respectivement un raccordement de câbles,
**caractérisée par** les dispositions
1.1 La zone (SSR) de barres collectrices est limitée en bas dans la région de la zone (ASR) de raccordement adjacente par une tôle (STB) de support d'isolateur,
1.2 La zone (ASR) de raccordement est limitée en haut dans la région de la zone (SSR) de barres collectrices adjacentes par une tôle (WTB) de support de transformateur,
1.3 La tôle (STB) de support d'isolateur et la tôle (WTB) de support de transformateur sont disposées à peu près parallèlement l'une à l'autre avec un écartement délimité par une équerre (SWL) de support gauche et une équerre (SWR) de support droite de telle manière qu'un transformateur (DFW...) de traversée correspondant peut être mis en position au dessous d'un support (DFS...) isolateur de traversée,
1.4 Les supports (DFS...) isolateurs de traversée et les transformateurs (DFW...) de traversée sont réalisés respectivement sur la tôle (STB) de support d'isolateur et sur la tôle (WTB) de support de transformateur respectivement comme tiroir (FES...) fonctionnel autonome,
1.5 Les supports (DFS...) isolateurs de traversée et les transformateurs (DFW...) de traversée sont guidés et immobilisés en position respectivement sur la tôle (STB) de support d'isolateur et sur la tôle (WTB) de support de transformateur par respectivement un contour (SFK) de guidage d'isolateur et par un contour (WFK) de guidage de transformateur,
1.6 Les supports (DFS...) isolateurs de traversée et les transformateurs (DFW...) de traversée sont reliés respectivement sur la tôle (STB) de support d'isolateur et sur la tôle (WTB) de support de transformateur, dans la région arrière de butée, par respectivement une baguette (SFL) de guidage d'isolateur et par une baguette (WFL) de guidage de transformateur de manière amovible à respectivement la tôle (STB) de support d'isolateur et à la tôle (WTB) de support de transformateur.

2. Installation de commutation en moyenne tension à blindage métallique, isolée par de l'air, suivant la revendication 1,
**caractérisée par** les dispositions
2.1 Les supports (DFS....) isolateurs de traversée et les transformateurs (DFW...) de traversée comportent à l'arrière respectivement un contour (SAK) extérieur de support isolateur parallélépipédique et un contour (WAK) extérieur de transformateur parallélépipédique,
2.2 II fait suite au contour (SAK) extérieur de support isolateur parallélépipédique et au contour (WAK) extérieur de transformateur parallélépipédique respectivement une ouverture (KLS) de blocage du support isolateur et une ouverture (KLW) de blocage de transformateur dirigées vers l'intérieur et ayant une section transversale concentrique dans la région intérieure,
2.3 L'ouverture (KLS) de blocage associée est délimitée dans la zone (SSR) de barres collectrices et dans la zone (ASR) de raccordement respectivement par un contour (SIK) intérieur de support isolateur également parallélépipédique et par un contour (WIK) intérieur de transformateur également parallélépipédique respectivement du support (DFS...) isolateur de traversée et du transformateur (DFW...) de traversée,
2.4 Il est prévu entre le contour (SAK) extérieur d'isolateur et le contour (SIK) intérieur d'isolateur du support (DFS...) isolateur de traversée et entre le contour (WAK) extérieur de transformateur et le contour (WIK) intérieur de transformateur du transformateur (DFW...) de traversée respectivement une tôle (BBO) formant écran supérieur, pouvant être enfilée du haut et une tôle (BBU) formant écran inférieur, pouvant être enfilée du bas,
2.5 II est disposé entre la tôle (BBO) formant écran supérieur et la tôle (BBU) formant écran inférieur une tôle (BBM) formant écran médiane de manière à avoir un recouvrement frontal.

3. Installation de commutation à moyenne tension à blindage métallique, isolée par de l'air, suivant les revendications 1 et 2,
**caractérisée par** les dispositions
3.1 Les contours (SAK, SIK) extérieur et intérieur parallélépipédiques des supports isolateurs et les contours (WAK, WIK) extérieur et intérieur parallélépipédiques des transformateurs comportent un contour de section transversale de préférence carrée,
3.2 Les contours (SAK, SIK) extérieur et intérieur parallélépipédiques des supports isolateurs et les contours (WAK, WIK) extérieur et intérieur parallélépipédiques des transformateurs comportent un contour de section transversale uniforme,
3.3 Les contours (SAK, SIK) extérieur et intérieur parallélépipédique des supports isolateurs et les contours (WAK, WIK) extérieur et intérieur parallélépipédiques des transformateurs (WAK, WIK) comportent un contour de section transversale uniforme.
